# FASCICULE DE BREVET EUROPEEN

(11) **EP 3 488 964 B1**
(45) Date de publication et mention de la délivrance du brevet: **10.07.2024**
(21) Numéro de dépôt: 18207056.5
(22) Date de dépôt: 19.11.2018
(51) Int. Cl.: B23P 19/12, B64F 5/10, B23P 19/10, B21D 43/00, B64D 27/40, B21D 39/20

(54) **PROCÉDÉ DE DÉGAGEMENT D'UN AXE CREUX D'UNE LIAISON PIVOT ENTRE UN PREMIER ÉLÉMENT ET UN DEUXIÈME ÉLÉMENT**
VERFAHREN ZUM LÖSEN EINER HOHLACHSE EINER SCHWENKVERBINDUNG ZWISCHEN EINEM ERSTEN ELEMENT UND EINEM ZWEITEN ELEMENT
METHOD OF RELEASING A HOLLOW AXIS FROM A PIVOT CONNECTION BETWEEN A FIRST ELEMENT AND A SECOND ELEMENT

(30) Priorité: 28.11.2017 FR 1761275
(43) Date de publication de la demande: 29.05.2019
(73) Titulaire: Airbus Operations SAS, 31060 Toulouse (FR)
(72) Inventeur: COLMAGRO, Jérôme, 31500 Toulouse (FR); MAUCONDUIT, Aurélien, 31270 Cugnaux (FR); MOULIS, Julien, 31530 Le Castera (FR)
(74) Mandataire: Gevers & Orès

(56) Documents cités:
- FR-A1- 2 975 323
- US-A- 1 824 743
- US-A- 2 775 025
- US-A- 3 050 840
- US-A- 4 349 952
- US-A- 5 074 536
- US-A1- 2009 039 198

## Description

### DOMAINE TECHNIQUE

La présente invention concerne un dispositif de manipulation d'un axe creux. L'axe creux est destiné à créer une liaison pivot entre un premier élément et un deuxième élément par l'engagement de l'axe creux dans un orifice du premier élément et un orifice du deuxième élément. En particulier, la présente invention concerne un procédé de dégagement d'un tel axe creux.

### ÉTAT DE LA TECHNIQUE

La manipulation d'un axe permettant de créer une liaison pivot entre deux éléments peut poser problème lorsque l'accès aux orifices permettant d'engager l'axe est limité. En effet, lorsque cet accès est limité, il peut être difficile de vérifier si les orifices des deux éléments sont alignés pour pouvoir engager l'axe dans les orifices.

Un moteur d'aéronef est relié à une voilure de l'aéronef par un mât (« pylon » en anglais). L'assemblage du mât au moteur est réalisé par des liaisons pivot. Or, l'accès permettant de réaliser ces liaisons pivot est très limité, ce qui empêche parfois la vérification de l'alignement des orifices avant d'engager les axes dans lesdits orifices. Un procédé de dégagement d'un axe creux selon l'art antérieur est décrit dans le document US3050840A.

### EXPOSÉ DE L'INVENTION

La présente invention a pour objet de pallier ces inconvénients en proposant un procédé permettant de dégager un axe creux sans avoir à vérifier visuellement que deux éléments sont alignés.

L'invention concerne un procédé dégagement d'un axe creux d'au moins un orifice d'un premier élément et d'au moins un orifice d'un deuxième élément à l'aide du dispositif de manipulation tel que décrit ci-dessus, l'axe creux étant destiné à créer une liaison pivot entre le premier élément et le deuxième élément par l'engagement de l'axe creux dans les orifices selon la revendication 1. Des modes de réalisation préférés sont décrits dans les revendications dépendantes.

Selon l'invention, le procédé de dégagement comprend :
- une première étape de contraction radiale du corps cylindrique à l'aide du module de commande de façon que le diamètre du corps cylindrique soit égal au premier diamètre,
- une étape d'introduction du corps cylindrique dans l'axe creux,
- une étape de dilatation radiale du corps cylindrique à l'aide du module de commande de façon que le diamètre du corps cylindrique soit égal au deuxième diamètre,
- une étape de préparation du module d'extraction,
- une étape de dégagement de l'axe creux dès que la résistance détectée par le module de détection et s'exerçant sur l'axe creux, tendant à empêcher le dégagement de l'axe creux est inférieure à un seuil prédéterminé.

De plus, l'étape de préparation du module d'extraction consiste à comprimer l'organe élastique en approchant la surface de compression vers la surface d'appui.

En outre, l'étape de dégagement consiste à un éloignement de la surface de compression de la surface d'appui à l'aide de l'organe élastique, la surface de compression étant configurée pour entraîner le corps cylindrique et l'axe creux par l'intermédiaire de la tige filetée, si la résistance détectée par le module de détection et s'exerçant sur l'axe creux, tendant à empêcher à empêcher le dégagement de l'axe creux est inférieure à un seuil prédéterminé.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente une vue schématique en coupe du premier élément et du deuxième élément en liaison pivot par l'intermédiaire d'un axe creux,
- la figure 2 représente une coupe longitudinale du dispositif de manipulation ;
- la figure 3 représente une coupe longitudinale du dispositif de manipulation ;
- les figures 4a à 4d représentent des vues en coupe du dispositif de manipulation dans différentes étapes du procédé d'engagement d'un axe creux,
- les figures 5a à 5g représentent des vues en coupe du dispositif de manipulation dans différentes étapes du procédé de dégagement d'un axe creux,
- la figure 6 représente une coupe transversale du dispositif de manipulation et de l'axe creux selon une coupe A-A représentée sur la figure 2,
- la figure 7 représente une vue synoptique du procédé d'engagement d'un axe creux,
- la figure 8 représente une vue synoptique du procédé de dégagement d'un axe creux.

### DESCRIPTION DÉTAILLÉE

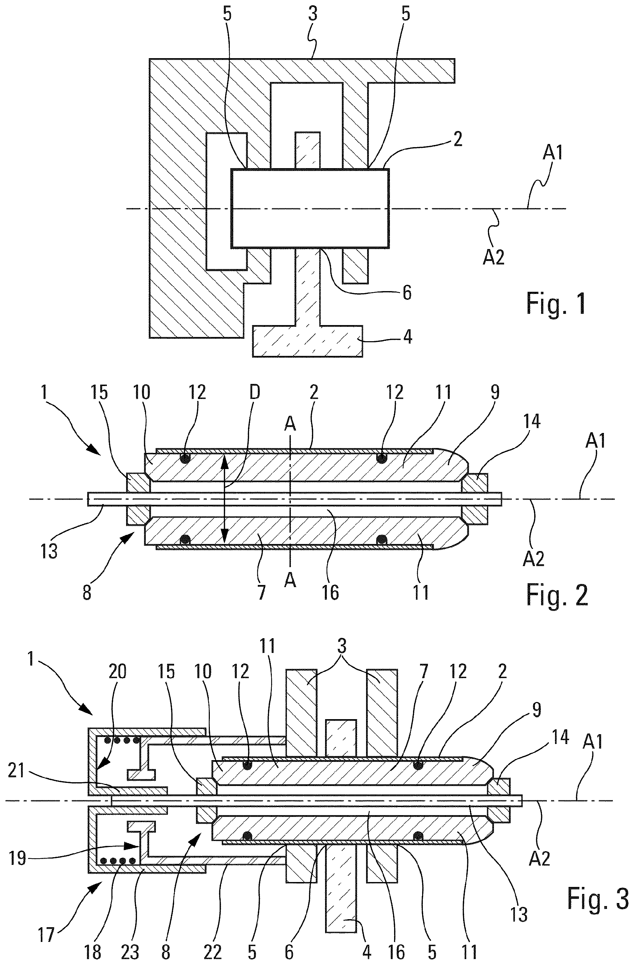

La figure 2 illustre un dispositif de manipulation 1 d'un axe creux 2.

L'axe creux 2 présente un axe longitudinal A1.

Ledit axe creux 2 est destiné à créer une liaison pivot entre un élément 3 et un élément 4 par l'engagement de l'axe creux 2 dans au moins un orifice 5 de l'élément 3 et dans au moins un orifice 6 de l'élément 4 (figure 1). La figure 1 illustre schématiquement un élément 3 correspondant à un mât et un élément 4 correspondant à un moteur d'aéronef.

Le dispositif de manipulation 1 permet d'engager un axe creux 2 dans les orifices 5, 6. Il permet également de dégager l'axe creux 2 des orifices 5, 6.

Le dispositif de manipulation 1 comprend un corps cylindrique 7 présentant un axe longitudinal A2 et un diamètre D variable par contraction radiale ou dilatation radiale du corps cylindrique 7. Ce corps cylindrique 7 est destiné à être introduit dans l'axe creux 2 de façon que l'axe longitudinal A2 soit parallèle à l'axe longitudinal A1. De préférence, l'axe longitudinal A2 et l'axe longitudinal A1 sont confondus, lorsque le corps cylindrique 7 est introduit dans l'axe creux 2.

Le dispositif de manipulation 1 comprend également un module de commande 8 du diamètre D du corps cylindrique 7. Le module de commande 8 permet de modifier le diamètre D du corps cylindrique 7.

Le module de commande 8 est configuré pour que le diamètre D du corps cylindrique 7 présente, alternativement, au moins un diamètre D1 adapté pour que le corps cylindrique 7 puisse se déplacer dans l'axe creux 2 et un diamètre D2 adapté pour que le corps cylindrique 7 soit bloqué dans l'axe creux 2.

Le corps cylindrique 7 comprend une extrémité 9. L'extrémité 9 est destinée à engager le dispositif de manipulation 1 et l'axe creux 2 dans le ou les orifices 5 et 6 de l'élément 3 et de l'élément 4. L'extrémité 9 est configurée pour faire saillie depuis l'axe creux 2 lorsque le corps cylindrique 7 est bloqué dans l'axe creux 2. L'extrémité 9 permet de s'assurer que les orifices 5 et 6 sont alignés. Il permet également d'aligner les orifices 5 et 6 s'ils ne sont pas alignés avant l'engagement de l'axe creux 2 dans les orifices. Dès que les orifices 5 et 6 sont alignés, l'extrémité 9 peut être engagée dans les orifices 5 et 6, puis l'axe creux 2 entraîné par le dispositif de manipulation 1.

Avantageusement, la première extrémité 9 présente une forme générale conique. La définition de la forme conique peut être comprise dans une définition élargie. Notamment, la forme conique peut signifier une forme d'ogive. Elle peut également signifier toutes les formes facilitant l'engagement de l'extrémité 9 et, par conséquent, de l'axe creux 2 dans les orifices 5 et 6.

De plus, la base de la forme conique de la première extrémité 9 peut présenter un diamètre supérieur ou égal au diamètre de l'axe creux 2 à manipuler de façon de le corps cylindrique 7 présente un épaulement au niveau de la base de la forme conique. Cet épaulement forme butée contre l'axe creux 2 lorsque le corps cylindrique 7 est bloqué dans l'axe creux 2.

Selon un mode de réalisation, le corps cylindrique 7 comprend au moins deux secteurs de cylindre 11 s'étendant le long de l'axe longitudinal A2.

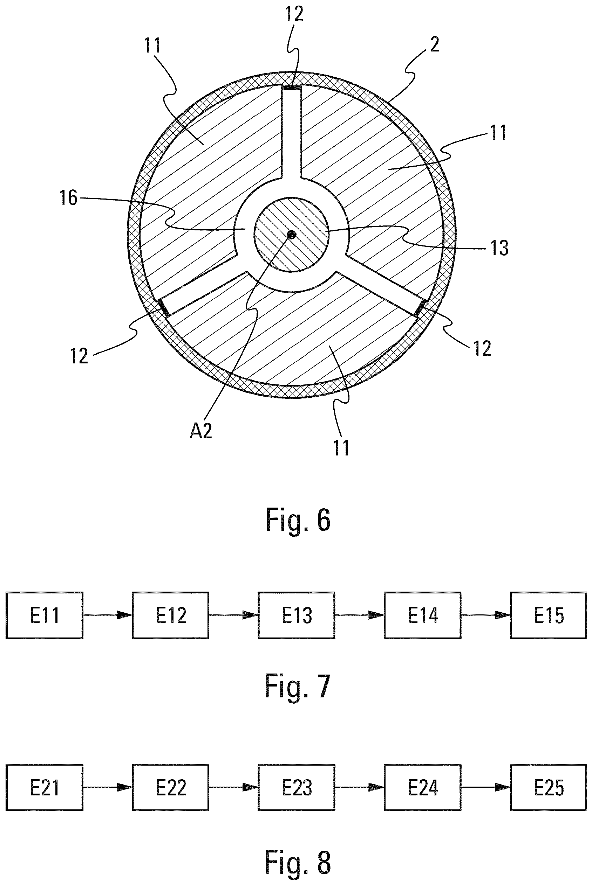

De préférence, le corps cylindrique 7 comprend trois secteurs de cylindre 11. Toutefois, un nombre plus élevé de secteurs de cylindre est possible. La figure 6 présente une coupe transversale A-A du dispositif de manipulation 1 représenté sur la figure 2 avec trois secteurs de cylindre 11.

De façon non limitative, les secteurs de cylindre 11 sont fabriqués à partir de métal, par exemple, de titane.

Le corps cylindrique 7 comprend également au moins un anneau élastique 12 retenant les secteurs de cylindre 11 de façon à former le corps cylindrique 7. Le ou chacun des anneaux élastiques 12 sont compris dans un plan sensiblement perpendiculaires à l'axe longitudinal A2.

L'élasticité du ou des anneaux 12 autorise la dilation radiale et la contraction radiale du diamètre D du corps cylindrique 7.

Avantageusement, le ou chacun des anneaux élastiques 12 est logé dans une gorge.

De façon non limitative, le ou les anneaux élastiques 12 correspondent à des joints toriques.

Le module de commande 8 peut inclure une tige filetée 13, une pièce de serrage 14 et une pièce de serrage 15. Les deux pièces de serrage 14 et 15 sont vissées sur la tige filetée 13.

Le corps cylindrique 7 présente une ouverture 16 s'étendant le long de l'axe longitudinal A2 dans laquelle est insérée la tige filetée 13. La pièce de serrage 14 est située au niveau de l'extrémité 9 du corps cylindrique 7. La pièce de serrage 15 est située au niveau de l'extrémité 10 du corps cylindrique 7.

Les anneaux élastiques 12 retiennent les secteurs de cylindre 11 sur la tige filetée 13. Les pièces de serrage 14 et 15 permettent de régler la dilation et la contraction du corps de cylindre 7.

Ainsi, un rapprochement par vissage de la pièce de serrage 15 vers la pièce de serrage 14 le long de la tige filetée 13 entraîne un écartement radial des secteurs de cylindre 11. L'écartement radial des secteurs de cylindre 11 procure ainsi un accroissement du diamètre D du corps cylindrique 7.

De plus, un éloignement par dévissage de la pièce de serrage 15 de la pièce de serrage 14 le long de la tige filetée 13 entraîne un rapprochement radial des secteurs de cylindre 11. Le ou les anneaux élastiques 12 engendrent le rapprochement radial des secteurs cylindriques 11 au fur et à mesure que la pièce de serrage 15 s'éloigne de pièce de serrage 14. Le rapprochement radial des secteurs de cylindre 11 procure ainsi une diminution du diamètre D du corps cylindrique 7.

De préférence, chacune des pièces de serrage 14 et 15 présente une forme générale de cône. Le cône de chacune des pièces de serrage 14 et 15 présente une hauteur le long de laquelle est vissée la tige filetée 13 et un sommet dirigé vers le corps cylindrique 7 lorsque les pièces de serrage 14 et 15 sont vissées sur la tige filetée 13. La définition du mot cône peut être prise dans un sens large. Par exemple, la forme des pièces de serrage 14 et 15 peuvent avoir une forme d'ogive, une forme tronconique ou toute autre forme facilitant l'éloignement radial des secteurs de cylindre 11.

Selon la figure 3, le dispositif de manipulation 1 comprend en outre un module d'extraction 17 de l'axe creux 2 engagé dans au moins un orifice 5 du premier élément 3 et dans au moins un orifice 6 du deuxième élément 4.

Le module d'extraction 17 est configuré pour dégager l'axe creux 2 du ou des orifices 5 du premier élément 3 et du ou des orifices 6 du deuxième élément 4 si une résistance, susceptible de s'exercer sur l'axe creux 2 et tendant à empêcher le dégagement de l'axe creux 2, est inférieure à un seuil prédéterminé. Ladite résistance correspond, par exemple, à une somme de forces de cisaillement s'exerçant sur l'axe creux 2 et engendrées par le premier élément 3 et le deuxième élément 4.

Le module d'extraction 17 comprend un système de détection configuré pour détecter la résistance. Le module d'extraction 17 est configuré pour dégager l'axe creux 2 du ou des orifices 5 du premier élément 3 et du ou des orifices 6 du deuxième élément 4, si la résistance détectée par le système de détection est inférieure au seuil prédéterminé.

Selon un premier mode de réalisation (non représenté), le module d'extraction comprend une partie préhensible. La partie préhensible est configurée pour être saisie par un opérateur. L'opérateur peut tirer en continu sur le module d'extraction 17 par l'intermédiaire de la partie préhensible pour trouver le moment où l'axe creux 2 est dégagé à l'aide du système de détection.

Selon un deuxième mode de réalisation (non représenté), le module d'extraction 17 comprend un moteur électrique. Le moteur électrique est configuré pour tirer sur l'axe creux 2 et pour jouer le rôle de système de détection. Le moteur électrique présentant ainsi un couple configuré pour dégager l'axe creux 2 si la résistance s'exerçant sur l'axe creux 2 est inférieure au seuil prédéterminé.

Selon un troisième mode de réalisation, le système de détection correspond à un système mécanique comportant au moins un organe élastique. Le ou les organes élastiques présentent des propriétés choisies pour permettre le dégagement de l'axe creux 2 si la résistance est inférieure au seuil prédéterminé.

Un organe élastique correspond, par exemple, à un ressort ou un élément hydraulique ou pneumatique ou tout autre organe permettant de détecter une résistance et de dégager l'axe creux 2 lorsque la résistance est inférieure à un seuil prédéterminé.

Selon une variante, le système mécanique comprend également :
- une surface d'appui 19 configurée pour être disposée à une distance fixe par rapport aux premiers et deuxième éléments 3, 4,
- une surface de compression 20 configurée pour comprimer le ou les organes élastiques 18 contre la surface d'appui 19 lorsque la surface de compression 20 est approchée de la surface d'appui 19, le ou les organes élastiques 18 exerçant une force tendant à écarter la surface de compression 20 de la surface d'appui 19,
- une ouverture filetée 21 solidaire de la surface de compression 20, l'ouverture filetée 21 étant configurée pour approcher ou éloigner la surface de compression 20 de la surface d'appui 19 lorsque l'ouverture filetée 21 est vissée ou dévissée sur la tige filetée 13.

Dans la figure 3, la surface d'appui 19 correspond à une surface circulaire externe d'une extrémité circulaire au moins partiellement fermée d'un cylindre creux 22. Le cylindre creux 22 est alors disposé sur un élément 3 au niveau de l'autre extrémité circulaire du cylindre qui est ouverte. Le cylindre creux 22 recouvre ainsi l'extrémité saillante de l'axe creux 2.

Dans la figure 3, la surface de compression 20 correspond à une surface circulaire interne d'une extrémité circulaire au moins partiellement fermée d'un cylindre creux 23. Le cylindre creux 22 est emboîté dans le cylindre creux 23 en enserrant le ressort hélicoïdal 18 entre la surface d'appui 19 et la surface de compression 20.

L'ouverture filetée 21 est configurée pour approcher ou éloigner la surface de compression 20 de la surface d'appui 19 lorsque l'ouverture filetée 21 est vissée ou dévissée sur la tige filetée 13. Dans la figure 3, l'ouverture filetée 21 est disposée au centre de l'extrémité circulaire du cylindre creux 23. La tige filetée 13 passe également au travers de l'extrémité circulaire du cylindre creux 22. L'ouverture permettant le passage de la tige filetée 13 au centre de l'extrémité circulaire du cylindre creux 22 a un diamètre assez grand pour que la tige filetée se déplace librement à travers cette ouverture.

Selon une variante du troisième mode de réalisation (représentée sur la figure 3), le ou les organes élastiques 18 comprennent au moins un ressort hélicoïdal 18. Le ou les ressorts hélicoïdaux 18 présentent un axe longitudinal parallèle à l'axe longitudinal A2 et comprend une première extrémité s'appuyant sur la surface d'appui 19 et une deuxième extrémité s'appuyant sur la surface de compression 20. De plus, le ou les ressorts hélicoïdaux présentent une raideur permettant l'éloignement de la surface de compression 20 de la surface d'appui 19 en entraînant le corps cylindrique 7 et l'axe creux 2 par l'intermédiaire de la tige filetée 13, si la résistance s'exerçant sur l'axe creux 2 est inférieure au seuil prédéterminé. Ainsi, il est possible de définir en-dessous de quelle valeur de résistance on autorise le dégagement de l'axe creux 2 en définissant une valeur de raideur appropriée de ressort hélicoïdal 18.

Selon une autre variante du troisième mode de réalisation (non représentée), le ou les organes élastiques 18 comprennent au moins un élément hydraulique ou pneumatique. Le ou les éléments hydrauliques ou pneumatiques comprennent une première extrémité fixée à la surface d'appui 19 et une deuxième extrémité fixée à la surface de compression 20. Le ou les éléments hydrauliques ou pneumatiques sont dimensionnés à un effort permettant l'éloignement de la surface de compression 20 de la surface d'appui 19 en entraînant le corps cylindrique 7 et l'axe creux 2 par l'intermédiaire de la tige filetée 13, si la résistance est inférieure au seuil prédéterminé.

Le ou les éléments hydrauliques ou pneumatiques peuvent comprendre un vérin dont l'axe longitudinal est parallèle à l'axe longitudinal A2 et qui présente un piston et un cylindre. Par exemple, le piston est fixé à la surface d'appui 19 et le cylindre est fixé à la surface de compression 20.

Le dispositif de manipulation 1 permet ainsi de détecter mécaniquement les conditions permettant un dégagement d'un axe creux 2 des orifices 5 et 8 des deux éléments 3 et 4. Cela permet alors de dégager l'axe creux 2 sans avoir à vérifier visuellement que les éléments 3 et 4 sont alignés. De plus, le module d'extraction 17 est configuré pour être disposé à une extrémité de l'axe creux 2. L'accès à une autre extrémité de l'axe creux 2 n'est pas nécessaire. Cela permet de dégager l'axe creux 2, lorsque l'accès à l'axe creux 2 est limité. Le dispositif de manipulation 1 permet de mettre en oeuvre un procédé d'engagement d'un axe creux 2 dans au moins un orifice 5 d'un premier élément 3 et dans au moins un orifice 6 d'un deuxième élément 4.

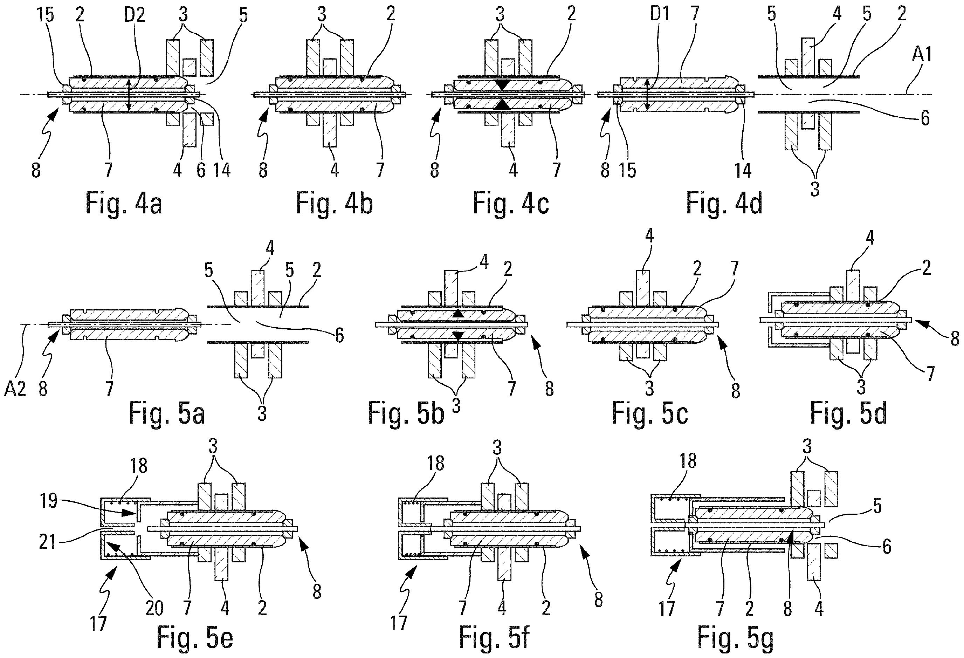

Ledit procédé d'engagement comprend, comme représenté sur la figure 7 :
- une étape E11 de contraction radiale du corps cylindrique 7 à l'aide du module de commande 8 de façon que le diamètre D du corps cylindrique 7 soit égal au premier diamètre D1,
- une étape E12 d'introduction du corps cylindrique 7 dans l'axe creux 2,
- une étape E13 de dilatation radiale du corps cylindrique 7 à l'aide du module de commande 8 de façon que le diamètre D du corps cylindrique 7 soit égal au diamètre D2,
- une étape E14 d'engagement de l'extrémité 9 puis de l'axe creux 2 dans le ou les orifices 5, 6 du premier élément 3 et du deuxième élément 4 dès que les orifices 5 et 6 sont alignés (figures 4a). L'engagement de l'étape E14 est réalisé jusqu'à ce que l'axe creux 2 soit bien disposé pour réaliser la liaison pivot (figure 4b)
- une étape E15 de contraction radiale du corps cylindrique 7 à l'aide du module de commande 8 de façon que le diamètre D du corps cylindrique 7 soit égal au premier diamètre D1 (figure 4c),
- une étape E16 d'extraction du corps cylindrique 7 de l'axe creux 2 (figure 4d).

L'engagement de l'extrémité 9 permet d'aligner les orifices 5 et 6 afin que l'axe creux 2 puisse être engagé.

L'étape E13 de dilatation radiale peut consister à rapprocher par vissage la pièce de serrage 15 de la pièce de serrage 14 le long de la tige filetée 13 pour entraîner un écartement radial des secteurs de cylindre 11. L'écartement radial des secteurs de cylindre 11 procure un accroissement du diamètre D du corps cylindrique 7.

De plus, l'étape E15 de contraction radiale (figure 4c) peut consister à éloigner par dévissage (dans le sens inverse du vissage) la pièce de serrage 15 de la pièce de serrage 14 le long de la tige filetée 13 pour entraîner un rapprochement radial des secteurs de cylindre 11. Le ou les anneaux élastiques 12 permettent le rapprochement radial des secteurs de cylindre 11 au fur et à mesure que la pièce de serrage 15 s'éloigne de la pièce de serrage 14. Le rapprochement radial des secteurs de cylindre 11 procure une diminution du diamètre D du corps cylindrique 7.

Le dispositif de manipulation 1 permet également de mettre en oeuvre un procédé de dégagement d'un axe creux 2 d'au moins un orifice 5 d'un premier élément 3 et d'au moins un orifice 6 d'un deuxième élément 4.

Ledit procédé de dégagement comprend, comme représenté sur la figure 8 :
- une étape E21 de contraction radiale du corps cylindrique 7 à l'aide du module de commande 8 de façon que le diamètre D du corps cylindrique 7 soit égal au diamètre D1 (figure 5a),
- une étape E22 d'introduction du corps cylindrique 7 dans l'axe creux 2 engagé dans les orifices de l'élément 3 et de l'élément 4 (figure 5b),
- une étape E23 de dilatation radiale du corps cylindrique 7 à l'aide du module de commande 8 de façon que le diamètre D du corps cylindrique 7 soit égal au diamètre D2 (figure 5c),
- une étape E24 de préparation du module d'extraction 17 (figure 5f),
- une étape E25 de dégagement de l'axe creux 2 (figure 5g) dès que la résistance détectée par le module de détection et s'exerçant sur l'axe creux 2, tendant à empêcher le dégagement de l'axe creux 2 est inférieure à un seuil prédéterminé.

L'étape E24 de préparation du module d'extraction 17 peut consister à comprimer l'organe élastique 18 en approchant la surface de compression 20 vers la surface d'appui 19.

L'étape E24 de préparation du module d'extraction 17 du dispositif de manipulation 1 peut être précédée par la mise en place de la surface d'appui 19 (figure 5d) sur un élément 3 ou 4. La surface de compression 20 est ensuite mise en place en enserrant le ressort hélicoïdal 18 entre la surface d'appui 19 et la surface de compression 20 (figure 5e).

L'étape E25 de dégagement peut consister à un éloignement de la surface de compression 20 de la surface d'appui 19 à l'aide de l'organe élastique 18. La surface de compression 20 est configurée pour entraîner le corps cylindrique 7 et l'axe creux 2 par l'intermédiaire de la tige filetée 13, si la résistance détectée par le module de détection et s'exerçant sur l'axe creux 2, tendant à empêcher à empêcher le dégagement de l'axe creux 2 est inférieure à un seuil prédéterminé.

## Revendications

1. Procédé de dégagement d'un axe creux (2) d'au moins un orifice (5) d'un premier élément (3) et d'au moins un orifice (6) d'un deuxième élément (4) à l'aide d'un dispositif de manipulation (1), le dispositif de manipulation (1) présentant un premier axe longitudinal (A1), l'axe creux (2) étant destiné à créer une liaison pivot entre le premier élément (3) et le deuxième élément (4) par l'engagement de l'axe creux (2) dans le au moins un orifice (5) du premier élément (3) et dans le au moins un orifice (6) du deuxième élément (4), **caractérisé en ce que** le dispositif de manipulation (1) comprend :
- un corps cylindrique (7) présentant un deuxième axe longitudinal (A2), le corps cylindrique (7) étant destiné à être introduit dans l'axe creux (2) de façon que le deuxième axe longitudinal (A2) soit parallèle au premier axe longitudinal (A1), le corps cylindrique (7) présentant un diamètre (D) variable par contraction radiale ou dilatation radiale du corps cylindrique (7),
- un module de commande (8) du diamètre (D) du corps cylindrique (7), le module de commande (8) étant configuré pour que le diamètre (D) du corps cylindrique (7) présente alternativement au moins un premier diamètre (D1) adapté pour que le corps cylindrique (7) puisse se déplacer dans l'axe creux (2) et un deuxième diamètre (D2) adapté pour que le corps cylindrique (7) soit bloqué dans l'axe creux (2),
le corps cylindrique (7) comprenant une première extrémité (9) configurée pour faire saillie depuis l'axe creux (2) lorsque le corps cylindrique (7) est bloqué dans l'axe creux (2),
- un module d'extraction (17) de l'axe creux (2) engagé dans le au moins un orifice (5) du premier élément (3) et dans le au moins un orifice (6) du deuxième élément (4), le module d'extraction (17) comprenant un système de détection configuré pour détecter une résistance susceptible de s'exercer sur l'axe creux (2) et tendant à empêcher le dégagement de l'axe creux (2), le module d'extraction (17) étant configuré pour dégager l'axe creux (2) du au moins un orifice (5) du premier élément (3) et du au moins un orifice (6) du deuxième élément (4) si la résistance détectée par le système de détection est inférieure à un seuil prédéterminé,
et **en ce que** ledit procédé comprend :
- une première étape (E21) de contraction radiale du corps cylindrique (7) à l'aide du module de commande (8) de façon que le diamètre (D) du corps cylindrique (7) soit égal au premier diamètre (D1),
- une étape (E22) d'introduction du corps cylindrique (7) dans l'axe creux (2),
- une étape (E23) de dilatation radiale du corps cylindrique (7) à l'aide du module de commande (8) de façon que le diamètre (D) du corps cylindrique (7) soit égal au deuxième diamètre (D2),
- une étape (E24) de préparation du module d'extraction (17),
- une étape (E25) de dégagement de l'axe creux (2) dès que la résistance détectée par le module de détection et s'exerçant sur l'axe creux (2), tendant à empêcher le dégagement de l'axe creux (2), est inférieure au seuil prédéterminé.

2. Procédé selon la revendication 1, dans lequel le système de détection du dispositif de manipulation (1) correspond à un système mécanique comportant au moins un organe élastique (18), le au moins un organe élastique présentant des propriétés choisies pour permettre le dégagement de l'axe creux (2) si la résistance est inférieure au seuil prédéterminé, et dans lequel le système mécanique comprend en outre :
- une surface d'appui (19) configurée pour être disposée à une distance fixe par rapport aux premiers et deuxième éléments (3, 4),
- une surface de compression (20) configurée pour comprimer le au moins un organe élastique (18) contre la surface d'appui (19) lorsque la surface de compression (20) est approchée de la surface d'appui (19), le au moins un organe élastique (18) exerçant une force tendant à écarter la surface de compression (20) de la surface d'appui (19),
- une ouverture filetée (21) solidaire de la surface de compression (20), l'ouverture filetée (21) étant configurée pour approcher ou éloigner la surface de compression (20) de la surface d'appui (19) lorsque l'ouverture filetée (21) est vissée ou dévissée sur une tige filetée (13) du module de commande (8), ledit procédé étant **caractérisé en ce que** l'étape (E24) de préparation du module d'extraction (17) consiste à comprimer l'organe élastique (18) en approchant la surface de compression (20) vers la surface d'appui (19).

3. Procédé selon la revendication 1, dans lequel le système de détection du dispositif de manipulation (1) correspond à un système mécanique comportant au moins un organe élastique (18), le au moins un organe élastique présentant des propriétés choisies pour permettre le dégagement de l'axe creux (2) si la résistance est inférieure au seuil prédéterminé, et dans lequel le système mécanique comprend en outre :
- une surface d'appui (19) configurée pour être disposée à une distance fixe par rapport aux premiers et deuxième éléments (3, 4),
- une surface de compression (20) configurée pour comprimer le au moins un organe élastique (18) contre la surface d'appui (19) lorsque la surface de compression (20) est approchée de la surface d'appui (19), le au moins un organe élastique (18) exerçant une force tendant à écarter la surface de compression (20) de la surface d'appui (19),
- une ouverture filetée (21) solidaire de la surface de compression (20), l'ouverture filetée (21) étant configurée pour approcher ou éloigner la surface de compression (20) de la surface d'appui (19) lorsque l'ouverture filetée (21) est vissée ou dévissée sur une tige filetée (13) du module de commande (8), ledit procédé étant **caractérisé en ce que** l'étape (E25) de dégagement consiste à un éloignement de la surface de compression (20) de la surface d'appui (19) à l'aide de l'organe élastique (18), la surface de compression (20) étant configurée pour entraîner le corps cylindrique (7) et l'axe creux (2) par l'intermédiaire de la tige filetée (13), si la résistance détectée par le module de détection et s'exerçant sur l'axe creux (2), tendant à empêcher à empêcher le dégagement de l'axe creux (2) est inférieure à un seuil prédéterminé.

4. Procédé selon la revendication 2, dans lequel le au moins un organe élastique (18) comprend au moins un ressort hélicoïdal (18) présentant un axe longitudinal parallèle au deuxième axe longitudinal (A2),
le au moins un ressort hélicoïdal (18) comprenant une première extrémité s'appuyant sur la surface d'appui (19) et une deuxième extrémité s'appuyant sur la surface de compression (20),
le au moins un ressort hélicoïdal (18) présentant une raideur permettant l'éloignement de la surface de compression (20) de la surface d'appui (19) en entraînant le corps cylindrique (7) et l'axe creux (2) par l'intermédiaire de la tige filetée (13), si la résistance s'exerçant sur l'axe creux (2) est inférieure au seuil prédéterminé,
ledit procédé étant **caractérisé en ce que** l'étape (E24) de préparation du module d'extraction (17) consiste à comprimer le ressort hélicoïdal (18) en approchant la surface de compression (20) vers la surface d'appui (19).

5. Procédé selon la revendication 2, dans lequel le au moins un organe élastique (18) comprend au moins un élément hydraulique ou pneumatique,
le au moins un élément hydraulique ou pneumatique comprenant une première extrémité fixée à la surface d'appui (19) et une deuxième extrémité fixée à la surface de compression (20),
le au moins un élément hydraulique ou pneumatique étant configuré pour éloigner la surface de compression (20) de la surface d'appui (19) en entraînant le corps cylindrique (7) et l'axe creux (2) par l'intermédiaire de la tige filetée (13), si la résistance s'exerçant sur l'axe creux (2) est inférieure au seuil prédéterminé,
ledit procédé étant **caractérisé en ce que** l'étape (E24) de préparation du module d'extraction (17) consiste à comprimer l'élément hydraulique ou pneumatique (18) en approchant la surface de compression (20) vers la surface d'appui (19).

## Patentansprüche

1. Verfahren zur Lösung einer Hohlachse (2) von mindestens einer Öffnung (5) eines ersten Elements (3) und mindestens einer Öffnung (6) eines zweiten Elements (4) mithilfe einer Handhabungsvorrichtung (1), wobei die Handhabungsvorrichtung (1) eine erste Längsachse (A1) aufweist, wobei die Hohlachse (2) dazu vorgesehen ist, durch den Eingriff der Hohlachse (2) in die mindestens eine Öffnung (5) des ersten Elements (3) und in die mindestens eine Öffnung (6) des zweiten Elements (4) eine Schwenkverbindung zwischen dem ersten Element (3) und dem zweiten Element (4) herzustellen, **dadurch gekennzeichnet, dass** die Handhabungsvorrichtung (1) Folgendes umfasst:
- einen zylindrischen Körper (7), der eine zweite Längsachse (A2) aufweist, wobei der zylindrische Körper (7) dazu vorgesehen ist, derart in die Hohlachse (2) eingeführt zu werden, dass die zweite Längsachse (A2) parallel zur ersten Längsachse (A1) ist, wobei der zylindrische Körper (7) einen durch radiales Zusammenziehen und radiale Ausdehnung des zylindrischen Körpers (7) variablen Durchmesser (D) aufweist,
- ein Steuerungsmodul (8) des Durchmessers (D) des zylindrischen Körpers (7), wobei das Steuerungsmodul (8) so konfiguriert ist, dass der Durchmesser (D) des zylindrischen Körpers (7) abwechselnd mindestens einen ersten Durchmesser (D1), der dazu angepasst ist, dass sich der zylindrische Körper (7) in der Hohlachse (2) verlagern kann, und einen zweiten Durchmesser (D2) aufweist, der dazu angepasst ist, dass der zylindrische Körper (7) in der Hohlachse (2) arretiert wird,
wobei der zylindrische Körper (7) ein erstes Ende (9) umfasst, das konfiguriert ist, um von der Hohlachse (2) hervorzustehen, wenn der zylindrische Körper (7) in der Hohlachse (2) arretiert ist,
- ein Extraktionsmodul (17) aus der Hohlachse (2), das in die mindestens eine Öffnung (5) des ersten Elements (3) und in die mindestens eine Öffnung (6) des zweiten Elements (4) eingreift, wobei das Extraktionsmodul (17) ein Erfassungssystem umfasst, das konfiguriert ist, um einen Widerstand zu erfassen, der imstande ist, auf die Hohlachse (2) einzuwirken, und dazu neigt, die Lösung der Hohlachse (2) zu verhindern, wobei das Extraktionsmodul (17) konfiguriert ist, um die Hohlachse (2) von der mindestens einen Öffnung (5) des ersten Elements (3) und der mindestens einen Öffnung (6) des zweiten Elements (4) zu lösen, wenn der von dem Erfassungssystem erfasste Widerstand kleiner ist als ein vorbestimmter Schwellenwert,
und dadurch, dass das Verfahren Folgendes umfasst:
- einen ersten Schritt (E21) des radialen Zusammenziehens des zylindrischen Körpers (7) mithilfe des Steuerungsmoduls (8) derart, dass der Durchmesser des zylindrischen Körpers (7) gleich dem ersten Durchmesser (D1) ist,
- einen Schritt (E22) der Einführung des zylindrischen Körpers (7) in die Hohlachse (2),
- einen Schritt (E23) der radialen Ausdehnung des zylindrischen Körpers (7) mithilfe des Steuerungsmoduls (8) derart, dass der Durchmesser des zylindrischen Körpers (7) gleich dem zweiten Durchmesser (D2) ist,
- einen Schritt (E24) der Vorbereitung des Extraktionsmoduls (17),
- einen Schritt (E25) der Lösung der Hohlachse (2), sobald der von dem Erfassungsmodul erfasste und auf die Hohlachse (2) wirkende Widerstand, der dazu neigt, die Lösung der Hohlachse (2) zu verhindern, kleiner ist als der vorbestimmte Schwellenwert.

2. Verfahren nach Anspruch 1, wobei das Erfassungssystem der Handhabungsvorrichtung (1) einem mechanischen System entspricht, das mindestens ein elastisches Bauteil (18) umfasst, wobei das mindestens eine elastische Bauteil Eigenschaften aufweist, die ausgewählt sind, um die Lösung der Hohlachse (2) zu ermöglichen, wenn der Widerstand kleiner ist als der vorbestimmte Schwellenwert, und wobei das mechanische System weiter Folgendes umfasst:
- eine Auflagefläche (19), die konfiguriert ist, um in einem festen Abstand in Bezug auf das erste und das zweite Element (3, 4) angeordnet zu sein,
- eine Verdichtungsfläche (20), die konfiguriert ist, um das mindestens eine elastische Bauteil (18) gegen die Auflagefläche (19) zusammenzudrücken, wenn die Verdichtungsfläche (20) an die Auflagefläche (19) angenähert wird, wobei das mindestens eine elastische Bauteil (18) eine Kraft ausübt, die dazu neigt, die Verdichtungsfläche (20) von der Auflagefläche (19) abzurücken,
- eine Gewindeöffnung (21), die fest verbunden mit der Verdichtungsfläche (20) gewunden ist, wobei die Gewindeöffnung (21) konfiguriert ist, um die Verdichtungsfläche (20) an die Auflagefläche (19) anzunähern oder von dieser wegzurücken, wenn die Gewindeöffnung (21) auf einem Gewindeschaft (13) des Steuerungsmoduls (8) eingeschraubt oder aufgeschraubt wird,
wobei das Verfahren **dadurch gekennzeichnet ist, dass** der Schritt (E24) der Vorbereitung des Extraktionsmoduls (17) darin besteht, das elastische Bauteil (18) durch Annähern der Verdichtungsfläche (20) zur Auflagefläche (19) hin zusammenzudrücken.

3. Verfahren nach Anspruch 1, wobei das Erfassungssystem der Handhabungsvorrichtung (1) einem mechanischen System entspricht, das mindestens ein elastisches Bauteil (18) umfasst, wobei das mindestens eine elastische Bauteil Eigenschaften aufweist, die ausgewählt sind, um die Lösung der Hohlachse (2) zu ermöglichen, wenn der Widerstand kleiner ist als der vorbestimmte Schwellenwert, und wobei das mechanische System weiter Folgendes umfasst:
- eine Auflagefläche (19), die konfiguriert ist, um in einem festen Abstand in Bezug auf das erste und das zweite Element (3, 4) angeordnet zu sein,
- eine Verdichtungsfläche (20), die konfiguriert ist, um das mindestens eine elastische Bauteil (18) gegen die Auflagefläche (19) zusammenzudrücken, wenn die Verdichtungsfläche (20) an die Auflagefläche (19) angenähert wird, wobei das mindestens eine elastische Bauteil (18) eine Kraft ausübt, die dazu neigt, die Verdichtungsfläche (20) von der Auflagefläche (19) abzurücken,
- eine Gewindeöffnung (21), die fest verbunden mit der Verdichtungsfläche (20) gewunden ist, wobei die Gewindeöffnung (21) konfiguriert ist, um die Verdichtungsfläche (20) an die Auflagefläche (19) anzunähern oder von dieser wegzurücken, wenn die Gewindeöffnung (21) auf einem Gewindeschaft (13) des Steuerungsmoduls (8) eingeschraubt oder aufgeschraubt wird,
wobei das Verfahren **dadurch gekennzeichnet ist, dass** der Schritt (E25) der Lösung aus einem Wegrücken der Verdichtungsfläche (20) von der Auflagefläche (19) mithilfe des elastischen Bauteils (18) besteht, wobei die Verdichtungsfläche (20) konfiguriert ist, um den zylindrischen Körper (7) und die Hohlachse (2) mittels des Gewindeschafts (13) anzutreiben, wenn der von dem Erfassungsmodul erfasste und auf die Hohlachse (2) wirkende Widerstand, der dazu neigt, die Lösung der Hohlachse (2) zu verhindern, kleiner ist als ein vorbestimmter Schwellenwert.

4. Verfahren nach Anspruch 2, wobei das mindestens eine elastische Bauteil (18) mindestens eine Spiralfeder (18) umfasst, die eine Längsachse parallel zur zweiten Längsachse (A2) aufweist,
wobei die mindestens eine Spiralfeder (18) ein erstes Ende, das auf der Auflagefläche (19) aufliegt, und ein zweites Ende, das auf der Verdichtungsfläche (20) aufliegt, umfasst,
wobei die mindestens eine Spiralfeder (18) eine Steifheit aufweist, die das Wegrücken der Verdichtungsfläche (20) von der Auflagefläche (19) durch Antreiben des zylindrischen Körpers (7) und der Hohlachse (2) mittels des Gewindeschafts (13) ermöglicht, wenn der auf die Hohlachse (2) wirkende Widerstand kleiner ist als der vorbestimmte Schwellenwert,
wobei das Verfahren **dadurch gekennzeichnet ist, dass** der Schritt (E24) der Vorbereitung des Extraktionsmoduls (17) darin besteht, die Spiralfeder (18) durch Annähern der Verdichtungsfläche (20) zur Auflagefläche (19) hin zusammenzudrücken.

5. Verfahren nach Anspruch 2, wobei das mindestens eine elastische Bauteil (18) mindestens ein hydraulisches oder pneumatisches Element umfasst,
wobei das mindestens eine hydraulische oder pneumatische Element ein erstes Ende, das an der Auflagefläche (19) befestigt ist, und ein zweites Ende, das an der Verdichtungsfläche (20) befestigt ist, umfasst,
wobei das mindestens eine hydraulische oder pneumatische Element konfiguriert ist, um die Verdichtungsfläche (20) von der Auflagefläche (19) durch Antreiben des zylindrischen Körpers (7) und der Hohlachse (2) mittels des Gewindeschafts (13) wegzurücken, wenn der auf die Hohlachse (2) wirkende Widerstand kleiner ist als der vorbestimmte Schwellenwert,
wobei das Verfahren **dadurch gekennzeichnet ist, dass** der Schritt (E24) der Vorbereitung des Extraktionsmoduls (17) darin besteht, das hydraulische oder pneumatische Element (18) durch Annähern der Verdichtungsfläche (20) zur Auflagefläche (19) hin zusammenzudrücken.

## Claims

1. Method for disengaging a hollow shaft (2) from at least one orifice (5) of a first element (3) and from at least one orifice (6) of a second element (4) using a manipulation device (1), the manipulation device (1) having a first longitudinal axis (A1), the hollow shaft (2) being intended to create a pivot link between the first element (3) and the second element (4) through the engagement of the hollow shaft (2) in at least one orifice (5) of the first element (3) and in at least one orifice (6) of the second element (4),
**characterized in that** the manipulation device (1) comprises:
- a cylindrical body (7) having a second longitudinal axis (A2), the cylindrical body (7) being intended to be introduced into the hollow shaft (2) so that the second longitudinal axis (A2) is parallel to the first longitudinal axis (A1), the cylindrical body (7) having a diameter (D) that is variable through radial contraction or radial expansion of the cylindrical body (7),
- a module for controlling (8) the diameter (D) of the cylindrical body (7), the control module (8) being configured so that the diameter (D) of the cylindrical body (7) has alternatively at least one first diameter (D1) suitable for the cylindrical body (7) to be able to be displaced in the hollow shaft (2) and a second diameter (D2) suitable for the cylindrical body (7) to be blocked in the hollow shaft (2),
the cylindrical body (7) comprising a first end (9) configured to protrude from the hollow shaft (2) when the cylindrical body (7) is blocked in the hollow shaft (2),
- a module for extracting (17) the hollow shaft (2) engaged in at least one orifice (5) of the first element (3) and in at least one orifice (6) of the second element (4), the extraction module (17) comprising a detection system configured to detect a resistance likely to be exerted on the hollow shaft (2) and tending to prevent the disengagement of the hollow shaft (2), the extraction module (17) being configured to disengage the hollow shaft (2) from the orifice or orifices (5) of the first element (3) and from the orifice or orifices (6) of the second element (4) if the resistance detected by the detection system is below a predetermined threshold,
and **in that** said method comprises:
- a first step (E21) of radial contraction of the cylindrical body (7) using the control module (8) so that the diameter (D) of the cylindrical body (7) is equal to the first diameter (D1),
- a step (E22) of introduction of the cylindrical body (7) into the hollow shaft (2),
- a step (E23) of radial expansion of the cylindrical body (7) using the control module (8) so that the diameter (D) of the cylindrical body (7) is equal to the second diameter (D2),
- a step (E24) of preparation of the extraction module (17),
- a step (E25) of disengagement of the hollow shaft (2) as soon as the resistance detected by the detection module and that is exerted on the hollow shaft (2), tending to prevent the disengagement of the hollow shaft (2) is below the predetermined threshold.

2. Method as claimed in claim 1, wherein the detection system of the manipulation device (1) corresponds to a mechanical system comprising at least one elastic member (18), the elastic member or members having properties chosen to allow the disengagement of the hollow shaft (2) if the resistance is below the predetermined threshold, and wherein the mechanical system further comprises:
- a bearing surface (19) configured to be arranged at a fixed distance relative to the first and second elements (3, 4),
- a compression surface (20) configured to compress the elastic member or members (18) against the bearing surface (19) when the compression surface (20) is brought closer to the bearing surface (19), the elastic member or members (18) exerting a force tending to separate the compression surface (20) from the bearing surface (19),
- a threaded opening (21) integral to the compression surface (20), the threaded opening (21) being configured to move the compression surface (20) closer to or away from the bearing surface (19) when the threaded opening (21) is screwed or unscrewed on the threaded rod (13) of the control module (8), said method being **characterized in that** the step (E24) of preparation of the extraction module (17) consists in compressing the elastic member (18) by bringing the compression surface (20) closer to the bearing surface (19).

3. Method as claimed in claim 1, wherein the detection system of the manipulation device (1) corresponds to a mechanical system comprising at least one elastic member (18), the elastic member or members having properties chosen to allow the disengagement of the hollow shaft (2) if the resistance is below the predetermined threshold, and wherein the mechanical system further comprises:
- a bearing surface (19) configured to be arranged at a fixed distance relative to the first and second elements (3, 4),
- a compression surface (20) configured to compress the elastic member or members (18) against the bearing surface (19) when the compression surface (20) is brought closer to the bearing surface (19), the elastic member or members (18) exerting a force tending to separate the compression surface (20) from the bearing surface (19),
- a threaded opening (21) integral to the compression surface (20), the threaded opening (21) being configured to move the compression surface (20) closer to or away from the bearing surface (19) when the threaded opening (21) is screwed or unscrewed on the threaded rod (13) of the control module (8), said method being **characterized in that** the disengagement step (E25) consists in moving the compression surface (20) away from the bearing surface (19) using the elastic member (18), the compression surface (20) being configured to drive the cylindrical body (7) and the hollow shaft (2) via the threaded rod (13), if the resistance detected by the detection module and that is exerted on the hollow shaft (2), tending to prevent the disengagement of the hollow shaft (2) is below a predetermined threshold.

4. Method as claimed in claim 2, wherein the elastic member or members (18) comprise at least one helical spring (18) having a longitudinal axis parallel to the second longitudinal axis (A2),
the helical spring or springs (18) comprising a first end bearing on the bearing surface (19) and a second end bearing on the compression surface (20),
the helical spring or springs (18) having a stiffness allowing the compression surface (20) to be moved away from the bearing surface (19) by driving the cylindrical body (7) and the hollow shaft (2) via the threaded rod (13), if the resistance that is exerted on the hollow shaft (2) is below the predetermined threshold,
said method being **characterized in that** the step (E24) of preparation of the extraction module (17) consists in compressing the helical spring (18) by bringing the compression surface (20) closer to the bearing surface (19).

5. Method as claimed in claim 2, wherein the elastic member or members (18) comprise at least one hydraulic or pneumatic element,
the hydraulic or pneumatic element or elements comprising a first end fixed to the bearing surface (19) and a second end fixed to the compression surface (20),
the hydraulic or pneumatic element or elements being configured to move the compression surface (20) away from the bearing surface (19) by driving the cylindrical body (7) and the hollow shaft (2) via the threaded rod (13), if the resistance that is exerted on the hollow shaft (2) is below the predetermined threshold
said method being **characterized in that** the step (E24) of preparation of the extraction module (17) consists in compressing the hydraulic or pneumatic element (18) by bringing the compression surface (20) closer to the bearing surface (19).
